# EUROPEAN PATENT APPLICATION

(11) **EP 1 553 326 A2**
(43) Date of publication of application: **13.07.2005**
(21) Application number: 05003724.1
(22) Date of filing: 15.05.2001
(51) Int. Cl.: F16H 9/18

(54) **Motor-converter with plate-type friction clutch**

(30) Priority: 23.05.2000 IT RE20000019 U; 06.03.2001 IT RE20010008 U
(62) Divisional of application: 01111747.0
(71) Applicant: STILFRENI S.r.l., 42030 Viano (Reggio Emilia) (IT); CORAM S.p.A., 25033 Cologne (Brescia) (IT)
(72) Inventor: Piantoni, Angelo, 25033 Cologne (Brescia) (IT)
(74) Representative: Lecce, Giovanni

(57) **Abstract**

A motor-converter with clutch-plates comprising:
a motor-shaft (1); at least a trapezoid-race, diameter variable, motive pulley (25), formed by two trapezoid, opposite half-pulleys (21, 23) idly-mounted on said motor-shaft (1); a chill (7), mounted on said motor-shaft (1) in coaxial alignment with at least one (21) of said half-pulleys, and comprising on the parallel side (20), facing said half-pulley (21), a friction clutch plate (22) and, on the opposite side (20'), a curved surface wall; said chill (7) comprising a lid (4) having a supporting housing (4'); a dragging bell (5) integral with the motor-shaft (1); masses (19) caused to move by said bell (5) and radially sliding in centrifugal direction along the curved surface wall of the chill (7); at least a trapezoid race, diameter variable, driven pulley (26) formed by two trapezoid, opposite half-pulleys (35, 36), and connected to said motive pulley (25) through a trapezoid belt (24); and means for the progressive recovery of the increase in clearance (17) due to the progressive reduction due to wear of the thickness of the friction clutch-ring (10) consisting of several removable shims (9) interposed between the elongated guide (2) and the motor-shaft (1).

## Description

The present invention relates to a motor-converter with plate-type friction clutch.

More particularly, the present invention relates to a continuous motor-converter with plate-type friction clutch of the type comprising two pulleys, one of them being a motive pulley, and the other one a driven pulley, constituted each of two combined and opposed parts having a variable transmission diameter, coupled through a trapezoid belt.

Such type of continuous motor-converter is particularly suitable to be used for small city cars, cars intended for the handicapped, motor-saddles, motor-scooters and the like.

As is known, gear-motors are devices that allow to change the motion transmission ratio value according to the acceleration and, therefore, the number of rotations of the motor-shaft. They comprise at least a motive pulley having a trapezoid race with a variable diameter for two corresponding belts, formed by two trapezoid half-pulleys, opposite, idly-mounted on a co-axial motor-shaft. In coaxial alignment with at least one of said half-pulleys, a chill is mounted that comprises, on the parallel side facing said semi-pulley, a plate -type friction clutch, and, on the opposite side, a wall having a curved surface. Along said walls there are radially sliding, in the centrifugal direction, masses caused to move by an end bell integral with the transmission shaft.

The centrifugal action of the masses causes an axial shifting of the chill which, as a consequence, engages said half-pulley through its plate-type friction clutch. Adjustable elastic means ensure the axial thrust for the realization. of said engagement relation. The rotation and axial sliding of said first half-pulley friction drags also the second half-pulley by means of a trapezoid belt. According to the acceleration and therefore the increase in the rotation number of the motor- shaft and the angle speed, the centrifugal force of the masses that move increasingly radially towards the outside increases, causing the maximum radial shift of the chill and the plate-type friction clutch of the coupled half-pulley, with a corresponding "climbing" or shifting towards the periphery of the trapezoid belt along the race formed by the coupling of the opposite half-pulleys. Such climbing or shifting causes a variation in the dragging diameter and, therefore, a continuous variation in the transmission ratio of the motor-converter.

Through the trapezoid belt, the transmission is sent to the trapezoid-race-variable-diameter driven pulley, also formed by two opposite half-pulleys. A motor converter with clutch-plates is known from US-A-2 678 566. Said device has the features of the preamble of claim 1.

The known plate-type friction clutch motor-converters, while being commonly used with satisfactory results from the functional point of view, have some drawbacks that cause the motion transmission to be imperfect and/or require continuous maintenance interventions for the adjustment and or replacement of the parts.

One of these drawbacks lies in that the known motor-converters are devoid of any axial adjustment means able to correctly make up for the clearance between the parts that ensues from the natural wear of the friction clutch material. As wear increases, the axial thrust of the counteracting elastic gears that are calibrated with optimum mean loads decreases. This involves the necessity of replacing the plate-type friction clutch after a specific number of working hours; when, i.e. the axial thrust of the elastic gears is lower than the minimum value necessary for the dragging, even if the residual thickness of the clutches might be still advantageously exploited.

Object of the present invention is to obviate the aforesaid drawback.

This and other objects that will be evident thanks to the following description are achieved by means of a motor- converter comprising:
- a motor-shaft;
- at least a trapezoid-race diameter variable motive pulley, formed by two trapezoid, opposite half-pulleys, idly-mounted on said motor-shaft;
- a chill, mounted on said motor-shaft in coaxial alignment with at least one of said half-pulleys, and comprising on the parallel side facing said half-pulley, a plate-type friction clutch and, on the opposite side, a curved surface wall; said chill comprising a lid having a supporting housing;
- a dragging bell integral with the motor-shaft;
- masses caused to move by said bell and radially sliding in the centrifugal direction along the curved surface wall of the chill; and
- at least a trapezoid-race diameter variable driven pulley formed by two trapezoid, opposite half-pulleys, and connected to said motive pulley through a trapezoid belt,
said motor- shaft comprising an elongated guide whose end is inserted in and supported by said housing, and the dragging bell and the complementary chill being made from light materials having high mechanical characteristics; wherein said motor-converter further comprises means for the progressive recovery of the increase in clearance due to the progressive reduction due to wear of the thickness of the friction clutch-ring, said means consisting of several removable shims interposed between the elongated guide and the motor-shaft.

Among the many advantages achieved with the motor-converter of the present invention, we mention the following ones.

In the first place, the axial contact thrust of the plate-type friction clutch against the trapezoid half-pulley of a variable motion transmission, takes place in a perfectly orthogonal correct manner, with a uniform wear of the plate-type friction clutch.

This allows to obtain the maximum exploitation of the thickness of the friction clutch material with the maximum efficiency and less maintenance interventions.

Besides, the use of light and resistant materials for the forming of the bell and the chill, as well as the addition of a further resting point, reduce the load on the terminal part of the motor-shaft and ensure a perfect coaxial and orthogonal alignment of the motor- shaft relatively to the plate-type friction clutch.

The recovery of the wear clearance of the dragging clutch is progressive and can be obtained in an easy and quick manner.

The constructive and functional characteristics of the motor-converter of the present invention will be better understood thanks to the following description; wherein reference is made to the figures of the attached drawings, reported only by way of illustrative, non limiting example, and wherein:
Figure 1 shows the schematic view of a cross-section of an embodiment of the motor-converter of the present invention;
Figure 2 shows the schematic view of an enlarged cross-section of the coupling and adjustment region of the thrust on the plate-type friction clutch, and
Figure 3 shows the schematic view of an enlarged cross-section of a second embodiment of the coupling and adjustment zone of the thrust of the friction clutch plate.

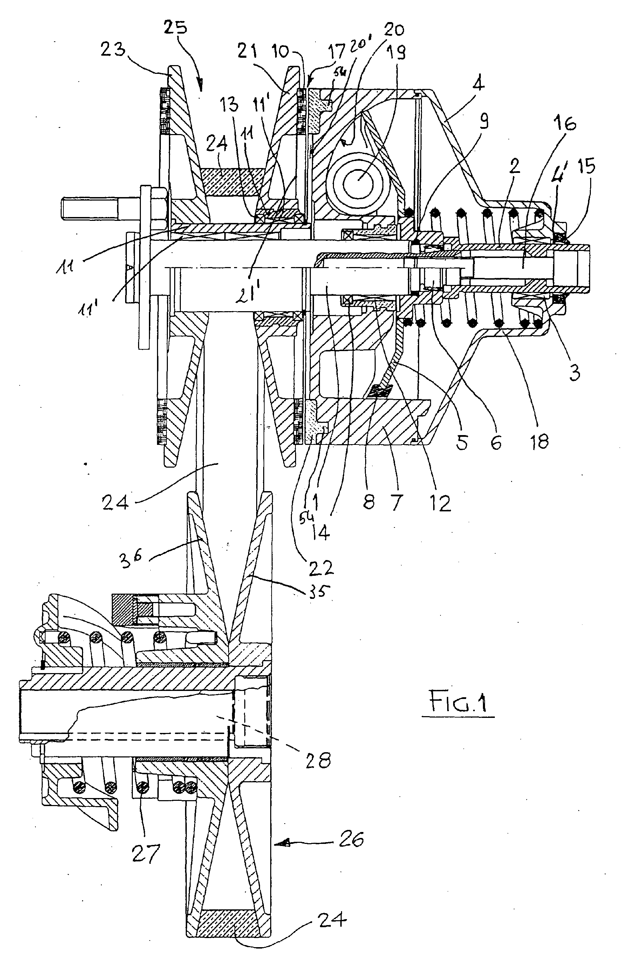

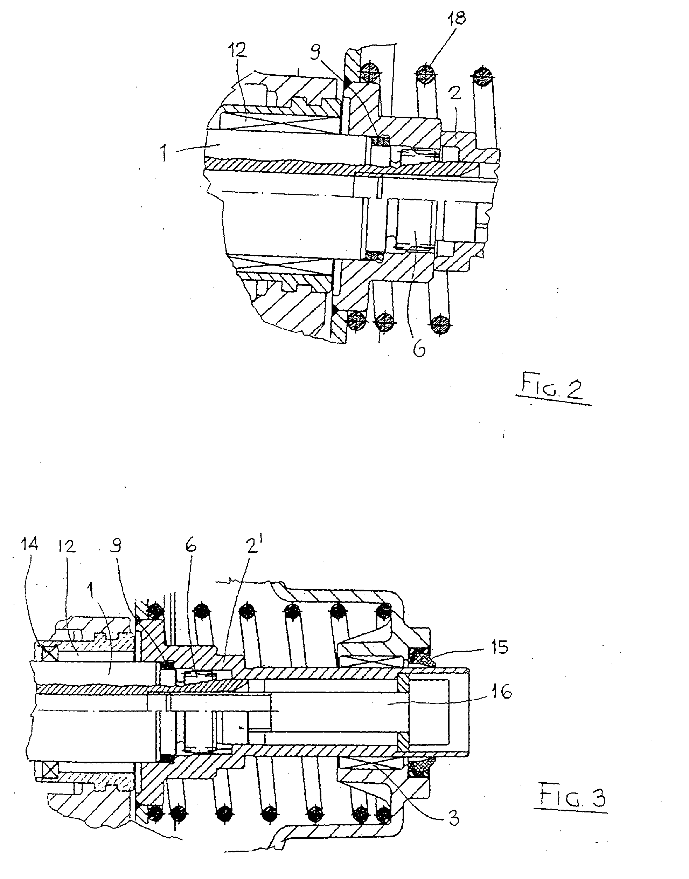

With reference to Figures 1-3, the motor-converter of the present invention comprises a motor-shaft 1, an external chill 7, coaxial and idly mounted by means of sliding and/or translation bearings and/or bushing on said shaft 1, and an external lid 4 fixed to said external chill 7. Lid 4, having preferable a substantially truncated cone shape with the greater base fixed to chill 7 and the smaller base closed, is provided, in the middle of the smaller base, with a housing 4'. An elongated guide 2 is fixed, at one end, to the fixed end of the motor-shaft 1, while at the opposite end, it is supported by a bearing or bushing 3 located in housing 4'.

Chill 7 has a curved internal surface 20 and an opposed flat external surface 20'. A friction clutch plate 22 is tied to the flat external surface 20' of chill 7. A friction clutch ring 10 is fixed, in alignment with the friction plate 22, to the external flat surface 21' of a first trapezoid half-pulley 21, also idly coaxially mounted on the motor-shaft 1 though bushings 11 associated to brasses or bearings 11'.

Its complementary second trapezoid half-pulley 23, also coaxial with shaft 1 and idle with respect to the latter, is coupled and opposed to the same by means of other bushings 11 and bearings 11'. The two half-pulleys 21, 23 form the trapezoid-race motive pulley 25.

A trapezoid-race driven pulley 26, also constituted of a first 35 and a second 36 half-pulleys, trapezoid, coupled and opposite, is placed parallel and aligned with respect to the motive pulley 25.

Both half-pulleys 35, 36 are mounted on a pin 28, parallel to the motor-shaft 1, and a spring 27 keeps the two half-pulleys 35, 36 approached and in touch with one another.

A trapezoid transmission belt 24 is placed in the respective trapezoid races of the motive 25 and driven 26 pulleys.

A bell 5, oriented towards the internal surface 20 of said chill 7, is fixed to shaft 1 through a coaxial serrated joint 6 and coupled to said chill 7 by means of peripheral radial sliding blocks 8. This technical feature of fixing the bell 5 to the shaft 1 via a coaxial serrated joint by radial sliding blocks 8 is not within the scope of the present invention.

A screw 16, screwed at the free end of the motor-shaft 1, keeps the elongated guide 2, together with the dragging bell 5, in engagement and coaxial alignment relation with said shaft 1.

The elongated guide 2, supported at the free end by a pad or bushing 3, located in housing 4', realizes the support of shaft 1, which allows a homogeneous distribution of the loads and the coaxial alignment between shaft 1 and the elongated guide 2 to be orthogonal between said shaft 1 and lid 4.

According to the present invention, the association of guide 2 to shaft 1 takes place by means of the interposition of several movable shims 9 that, during the use, are progressively eliminated to recover the increase in clearance 17 ensuing from the progressive reduction due the wear of the clutch-ring 10.

A counteracting spring 18, coaxial to guide 2 and located on said guide 2 between the dragging bell 5 and the smaller base of lid 4, keeps the dragging bell 5 tensioned and guide-like axially oscillating.

Masses 19, free to move according to radial directions, are located in the room defined by the internal curve surface 20 of chill 7 and the dragging bell 5.

During the working, the rotation speed of shaft 1 is transmitted to the dragging bell 5 and from the latter to chill 7, through the engagement of masses 19 on its internal curved surface 20.

With the motor on and slowly running, the rotation speed is not sufficient to generate a centrifugal force such as to cause the radial sliding towards the outside of masses 19; the latter remain in their resting position, kept standstill by the counteracting spring 18. The half-pulleys 21, 23, being not engaged in any way with the moving chill 7, and being idle with respect to the motor-shaft 1, do not rotate and therefore do not drag the transmission belt 24.

With the acceleration of the motor and the increase in speed of the motor-shaft 1 of the dragging bell 5 and masses 19, the latter are submitted to the action of a corresponding centrifugal force that pushes them radially towards the outside, with a radial climbing motion along the internal curved surface 20 of chill 7. Therefore, chill 7 is pushed to slide axially towards the first trapezoid half-pulley 21 of the motive pulley 25. When the friction clutch plate 22 comes in touch and friction relation with the friction clutch-ring 10, the first half-pulley 21 is dragged in the rotary motion. The higher the rotation speed of the motor-shaft 1, the greater the pushing of masses 19 towards the outside, with a greater axial shifting of chill 7 and the first half-pulley 21.

The motion is transmitted by friction of the first half-pulley 21 to the transmission belt 24 and from this to the second half-pulley 23. Speed variations cause the variation of the diametric position of the transmission belt 24 along the race of the motive pulley 25, varying the transmission ratio.

Each variation causes a complementary modification of the ratio on the driven pulley 26, as the transmission belt 24 modifies also on the same its diametric position, spacing axially the two coaxial complementary half-pulleys 35, 36 that make it up, overcoming the resistance opposed by the counteracting spring 27.

The presence of the elongated guide2 allows the motor-shaft 1 to be supported at its free end on bearing 3 located in housing 4' of lid 4. Such arrangement ensures the necessary orthogonality of the motor-shaft 1 with the friction clutch ring 10.

Besides, to ensure such orthogonality, the weights of bell 5 and chill 7 are reduced, as such components are made from light materials with mechanical characteristics. Such a light material may be a plastic material reinforced with fiberglass, carbon fibers or organic fibers having a high tenacity, such as for instance Kevlar fibers. Such reinforced plastic material has mechanical properties suitable for the particular application and relatively low specific weights. By mere way of example, there may be employed reinforced plastic materials comprising 30-45% fiberglass. In particular, the plastic materials reinforced with 30% fiberglass have a density of 1.6 kg/dmc, a traction modulus of 11000 Mpa, a flexion modulus of 10300 Mpa and an ultimate traction stress of 158 MPa. The plastic materials reinforced with 45% fiberglass have about the same density, a traction modulus of 16000 MPa, a flexion modulus of 15200 MPa and an ultimate traction stress 158 MPa. Beside, the reinforced plastic materials have a plastic material-steel friction coefficient of 0.17.

The elongated guide 2 may be of an independent type, as shown in Figure 1; or said guide 2' may be produced integrally with the dragging bell 4, as shown in Figure 3.

All sliding and/or translation bearings and/or bushings 3, 11, 12 are protected with annular gaskets 13, 14, 15.

According to a preferred embodiment, the friction clutch plate 22, preferably made from cast iron, is fixed in a stable manner and without the possibility of coming out at the external chill 7 by means of an annular back element 54, having the shape of a circular inclined serration.

The fastening is obtained by co-molding of the aluminium chill on the cast iron friction plate.

The dragging bell 5 is an enbloc, without weldings, and is preferably obtained by molding high resistance reinforced plastic materials.

The masses 19 can be constituted of metal inserts enclosed in envelopes from reinforced plastic material. While the present invention has been described above with reference to some specific embodiments thereof, reported by way of illustrative, non limiting examples, it is obvious that those skilled in the art will be able to introduce various changes and modifications in the light of the above reported description.

## Claims

1. A motor-converter with clutch-plates comprising:
- a motor-shaft (1);
- at least a trapezoid-race, diameter variable, motive pulley (25), formed by two trapezoid, opposite half-pulleys (21, 23) idly-mounted on said motor-shaft (1);
- a chill (7), mounted on said motor-shaft (1) in coaxial alignment with at least one (21) of said half-pulleys, and comprising on the parallel side (20), facing said half-pulley (21), a friction clutch plate (22) and, on the opposite side (20'), a curved surface wall; said chill (7) comprising a lid (4) having a supporting housing (4');
- a dragging bell (5) integral with the motor-shaft (1);
- masses (19) caused to move by said bell (5) and radially sliding in centrifugal direction along the curved surface wall of the chill (7); and
- at least a trapezoid race, diameter variable, driven pulley (26) formed by two trapezoid, opposite half-pulleys (35, 36), and connected to said motive pulley (25) through a trapezoid belt (24),
wherein the motor-shaft (1) comprises an elongated guide (2) whose end is inserted in and supported by said housing (4'), and the dragging bell (5) and the complementary chill (7) are made from light materials having high mechanical characteristics, **characterized in that** said motor-converter further comprises means for the progressive recovery of the increase in clearance (17) due to the progressive reduction due to wear of the thickness of the friction clutch-ring (10), said means consisting of several removable shims (9) interposed between the elongated guide (2) and the motor-shaft (1 ).

2. The motor-converter according to claim 1, wherein the light material having high mechanical characteristics is a plastic material reinforced with fiberglass, carbon fibers or high tenacity organic fibers.

3. The motor-converter according to claim1 or 2, wherein the elongated guide (2) together with the dragging bell (5) are kept in engagement and coaxial alignment relation with said shaft (1) by means of a screw (16) screwed at the free end of the motor-shaft (1 ).

4. The motor-converter according to anyone of the preceding claims, wherein a counteracting spring (18) coaxial relatively to the elongated guide (2) and located on said guide (2) between the dragging bell (5) and lid (4), keeps the dragging bell (5) tensioned and guide -like axially oscillating.

5. The motor-converter according to anyone of the preceding claims, wherein the elongated guide (2') is integral with the dragging bell (5).

6. The motor-converter according to anyone of the preceding claims, wherein bearings (3) that support the end of the elongated guide (2), the bearings (11') that allow the sliding of the half-pulley (21) on the motor-shaft (1) and those (12) that allow the sliding of chill (7) on said shaft (1 ), are protected by annular gaskets (13, 14, 15).

7. The motor-converter according to anyone of the preceding claims, wherein the motor-shaft (1) forms en enbloc with the elongated guide (2).

8. The motor-converter according to anyone of the preceding claims, wherein the friction clutch plate (22) is made from cast iron and fastened to the external chill (7) by means of an annular back element (54) having the shape of a serration, preferably circular or inclined.

9. The motor-converter according to anyone of the preceding claims, wherein the spherical masses (19) are constituted of metal inserts enclosed in envelopes from reinforced material.
